# EUROPEAN PATENT APPLICATION

(11) **EP 4 585 625 A1**
(43) Date of publication of application: **16.07.2025**
(21) Application number: 23863272.3
(22) Date of filing: 08.09.2023
(51) Int. Cl.: C08F 265/06, C10M 145/14, C10N 30/06, C10N 40/02, C10N 40/04, C10N 40/08, C10N 40/20, C10N 40/25

(54) **POLYMER, FRICTION REDUCER FOR LUBRICATING OIL, AND LUBRICATING OIL COMPOSITION**

(30) Priority: 09.09.2022 JP 2022143800
(71) Applicant: Mitsubishi Chemical Corporation, Tokyo 100-8251 (JP)
(72) Inventor: TOKUE, Hiroshi, Tokyo 100-8251 (JP); MATSUMURA, Kazunari, Tokyo 100-8251 (JP); MASUDA, Eri, Tokyo 100-8251 (JP)
(74) Representative: Hoffmann Eitle
(86) International application number: PCT/JP2023/032862
(87) International publication number: WO 2024/053734

(57) **Abstract**

A polymer includes a main chain polymer structure and a side chain polymer structure, in which the side chain polymer structure contains a constitutional unit derived from an alkyl (meth)acrylate (a) having an alkyl group having 11 to 30 carbon atoms, and a mass average molecular weight of the polymer is 90000 or less.

## Description

### TECHNICAL FIELD

The present invention relates to a polymer for use in a lubricating oil, a friction reducer for a lubricating oil, and a lubricating oil composition.

Priority is claimed on Japanese Patent Application No. 2022-143800, filed in Japan on September 9, 2022, the content of which is incorporated herein by reference.

### BACKGROUND ART

Various types of friction reducers are blended into lubricating oils such as engine oils or drive system oils of automobiles for the purpose of reducing energy loss due to friction or extending a service life of equipment by the prevention of burn-in. In recent years, in the background of reducing the viscosity of lubricating oils for the purpose of saving fuel, the load on the contact surfaces between metals becomes increasingly severe, so the role of friction reducers becomes even more important.

Examples of the friction reducer include oiliness improvers such as long-chain fatty acid esters and fatty acid amides, anti-wear agents such as phosphate esters and zinc dithiophosphates, extreme pressure agents such as organic sulfur compounds and organic halogen compounds, and friction adjusters such as organic molybdenum compounds. However, there is a problem in that a friction reducing effect is insufficient only with these additives depending on the use conditions and the use environment. In order to overcome this problem, studies have been conducted on the use of a polymer material as a friction reducer.

For example, Patent Document 1 discloses that a (meth)acrylic graft copolymer can be suitably used as a friction adjuster.

### Citation List

### Patent Documents

Patent Document 1: Japanese Unexamined Patent Application, First Publication No. 2022-113676

### SUMMARY OF THE INVENTION

### Technical Problem

However, an effect of reducing friction is insufficient in the method of Patent Document 1. In addition, the viscosity of the lubricating oil composition is high and the energy loss due to stirring resistance is large, resulting in a deterioration in fuel saving performance.

An object of the present invention is to provide a polymer, and to provide a polymer that can be used to provide a polymer lubricating oil additive, a friction reducer for a lubricating oil, and a lubricating oil composition, which have a high friction reducing effect and a low viscosity.

### MEANS TO SOLVE THE PROBLEM

The present invention has the following aspects.
[1] A polymer comprising:
   a main chain polymer structure; and
   a side chain polymer structure,
   wherein the side chain polymer structure contains a constitutional unit derived from an alkyl (meth)acrylate (a) having an alkyl group having 11 to 30 carbon atoms, and
   a mass average molecular weight of the polymer is 90000 or less.
[2] The polymer according to [1], wherein, in a case where a base oil solution containing 2% by mass of the polymer is prepared, a kinematic viscosity at 40°C measured in accordance with ASTM D7279 (D445) is 22.4 cSt or less, and
   the base oil is a base oil of API standard Group III Plus.
[3] A polymer comprising:
   a main chain polymer structure; and
   a side chain polymer structure,
   wherein the side chain polymer structure contains a constitutional unit derived from an alkyl (meth)acrylate (a) having an alkyl group having 11 to 30 carbon atoms,
   in a case where a base oil solution containing 2% by mass of the polymer is prepared, a kinematic viscosity at 40°C measured in accordance with ASTM D7279 (D445) is 22.4 cSt or less, and
   the base oil is a base oil of API standard Group III Plus.
[4] The polymer according to [3], wherein the mass average molecular weight is less than 50000.
[5] The polymer according to any one of [1] to [4], wherein the polymer further contains a constitutional unit derived from an alkyl (meth)acrylate (b) having an alkyl group having 1 to 10 carbon atoms.
[6] The polymer according to any one of [1] to [5], wherein the polymer further contains a constitutional unit derived from a vinyl-based radical polymerizable monomer (m1).
[7] The polymer according to any one of [1] to [6], wherein a proportion of the main chain polymer structure is preferably 5% to 98% by mass, more preferably 10% to 95% by mass, and still more preferably 20% to 90% by mass with respect to a total mass of the polymer.
[8] The polymer according to any one of [1] to [7], wherein a proportion of the side chain polymer structure is preferably 2% to 95% by mass, more preferably 5% to 90% by mass, and still more preferably 10% to 80% by mass with respect to a total mass of the polymer.
[9] The polymer according to any one of [1] to [8], wherein the alkyl (meth)acrylate (a) is preferably an alkyl (meth)acrylate having an alkyl group having 11 to 20 carbon atoms, more preferably an alkyl (meth)acrylate having an alkyl group having 11 to 18 carbon atoms, and still more preferably an alkyl (meth)acrylate having an alkyl group having 11 to 14 carbon atoms.
[10] The polymer according to any one of [1] to [9], wherein a contained amount of the constitutional unit derived from the alkyl (meth)acrylate (a) is preferably 50% to 100% by mass, more preferably 60% to 100% by mass, still more preferably 70% to 99% by mass, and particularly preferably 80% to 98% by mass with respect to a total mass of the side chain polymer structure.
[11] The polymer according to any one of [1] to [10], wherein a contained amount of the constitutional unit derived from the alkyl (meth)acrylate (a) is preferably 20% to 98% by mass, more preferably 25% to 95% by mass, and still more preferably 30% to 90% by mass with respect to a total mass of the polymer.
[12] The polymer according to any one of [1] to [11], wherein the polymer further contains a constitutional unit derived from an alkyl (meth)acrylate (b) having an alkyl group having 1 to 10 carbon atoms, and the (meth)acrylate (b) is preferably a (meth)acrylate having a linear or branched alkyl group, more preferably an alkyl acrylate having an alkyl group having 2 to 8 carbon atoms, still more preferably an alkyl acrylate having an alkyl group having 2 to 4 carbon atoms, and particularly preferably n-butyl acrylate.
[13] The polymer according to any one of [1] to [12], wherein the polymer further contains a constitutional unit derived from an alkyl (meth)acrylate (b) having an alkyl group having 1 to 10 carbon atoms, and a contained amount of the constitutional unit derived from the (meth)acrylate (b) is preferably 3% to 80% by mass, more preferably 5% to 75% by mass, and still more preferably 10% to 70% by mass with respect to a total mass of the polymer.
[14] The polymer according to any one of [1] to [13], wherein the polymer further contains a constitutional unit derived from another radical polymerizable vinyl-based compound (c) that does not belong to any of the constitutional unit derived from the alkyl (meth)acrylate (a) or the constitutional unit derived from the alkyl (meth)acrylate (b) having an alkyl group having 1 to 10 carbon atoms, and the radical polymerizable vinyl-based compound (c) is preferably an alkyl (meth)acrylate having a polar group, more preferably an alkyl (meth)acrylate having a hydroxyl group, a carboxy group, an amino group, or an amide group, and still more preferably an alkyl (meth)acrylate having a hydroxyl group.
[15] The polymer according to any one of [1] to [14], wherein the polymer further contains a constitutional unit derived from another radical polymerizable vinyl-based compound (c) which does not belong to any of the constitutional unit derived from the alkyl (meth)acrylate (a) or the constitutional unit derived from the alkyl (meth)acrylate (b) having an alkyl group having 1 to 10 carbon atoms, and a contained amount of the constitutional unit derived from the other radical polymerizable vinyl-based compound (c) is preferably 0% to 20% by mass, more preferably 0% to 10% by mass, and still more preferably 0% to 5% by mass with respect to a total mass of the polymer.
[16] The polymer according to any one of [1] to [15], wherein the polymer further contains a constitutional unit derived from a macromonomer (M).
[17] The polymer according to [16], wherein the macromonomer (M) contains the constitutional unit derived from the alkyl (meth)acrylate (a) having an alkyl group having 11 to 30 carbon atoms.
[18] The polymer according to [16], wherein the macromonomer (M) has a structure of Formula (1),
   (in the formula, X¹ to Xⁿ⁻¹ each independently represent a hydrogen atom, a methyl group, or CH₂OH, and Y¹ to Yⁿ each independently represent a substituent other than X¹ to Xⁿ⁻¹ which is bonded to a vinyl group of a vinyl-based radical polymerizable monomer (m2) that is a monomeric constitutional unit of the macromonomer (M), Z represents a terminal group, and n represents an integer of 2 to 10000) 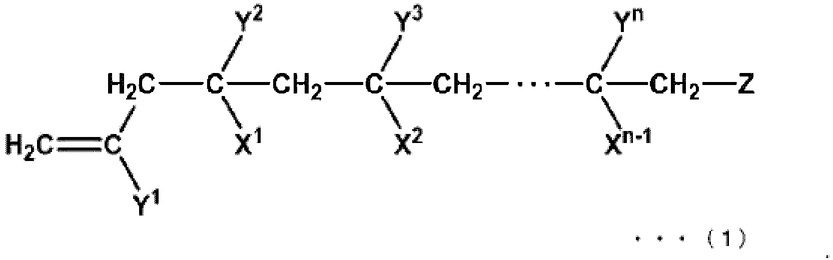
[19] The polymer according to [18], wherein the vinyl-based radical polymerizable monomer (m2) includes the alkyl (meth)acrylate (a).
[20] The polymer according to any one of [16] to [19], wherein a contained amount of the constitutional unit derived from the alkyl (meth)acrylate (a) is preferably 50% to 100% by mass, more preferably 60% to 100% by mass, still more preferably 70% to 99% by mass, and particularly preferably 80% to 98% by mass with respect to a total mass of the macromonomer (M).
[21] The polymer according to any one of [16] to [20], wherein the macromonomer (M) contains a constitutional unit derived from an alkyl (meth)acrylate (b) having an alkyl group having 1 to 10 carbon atoms, and a contained amount of the constitutional unit derived from the (meth)acrylate (b) is more preferably 0.5% to 40% by mass, still more preferably 1% to 30% by mass, and particularly preferably 1.5% to 20% by mass with respect to a total mass of the macromonomer (M).
[22] The polymer according to any one of [1] to [21], wherein a ratio represented by [the contained amount of the constitutional unit derived from the alkyl (meth)acrylate (b) having an alkyl group having 1 to 10 carbon atoms]/[the contained amount of the constitutional unit derived from the alkyl (meth)acrylate (a)] in the macromonomer (M) is preferably 0.001 to 0.1, more preferably 0.005 to 0.05, and still more preferably 0.01 to 0.03.
[23] The polymer according to any one of [16] to [22], wherein a contained amount of the constitutional unit derived from the macromonomer (M) is preferably 1% to 70% by mass, more preferably 2% to 60% by mass, and still more preferably 5% to 50% by mass with respect to a total mass of the polymer.
[24] The polymer according to any one of [16] to [23], wherein a mass average molecular weight (Mw) of the macromonomer (M) measured by gel permeation chromatography is preferably 5000 or more and 50000 or less, more preferably 8000 or more and 40000 or less, and still more preferably 10000 or more and 30000 or less.
[25] The polymer according to any one of [16] to [24], wherein a number-average molecular weight (Mn) of the macromonomer (M) measured by gel permeation chromatography (GPC) is preferably 500 to 30000, more preferably 1000 to 25000, and particularly preferably 2000 to 20000.
[26] The polymer according to any one of [16] to [25], wherein a molecular weight distribution (Mw/Mn) of the macromonomer (M) measured by gel permeation chromatography is preferably 1.0 or more and 10 or less, more preferably 1.2 or more and 8 or less, and still more preferably 1.5 or more and 5 or less.
[27] The polymer according to any one of [1] to [26], wherein a mass average molecular weight (Mw) of the polymer measured by GPC is preferably 90000 or less, more preferably 10000 or more and 90000 or less, still more preferably 12000 to 85000, particularly preferably 15000 to 80000, and most preferably 20000 to 75000.
[28] The polymer according to any one of [1] to [27], wherein a number-average molecular weight (Mn) of the polymer measured by gel permeation chromatography (GPC) is preferably 5000 or more and 50000 or less, more preferably 7000 or more and 40000 or less, and still more preferably 10000 or more and 30000 or less.
[29] The polymer according to any one of [1] to [28], wherein a molecular weight distribution (Mw/Mn) of the polymer measured by gel permeation chromatography (GPC) is preferably 1.0 or more and 20 or less, more preferably 1.5 or more and 15 or less, and still more preferably 2.0 or more and 10 or less.
[30] The polymer according to any one of [1] to [29], wherein, in a case where a base oil solution containing 2% by mass of the polymer is prepared, a friction coefficient measured at 40°C using an SRV5 tester (manufactured by Optimol Instruments Pruftechnik GmbH) is preferably 0.16 or less, more preferably less than 0.138, and still more preferably 0.135 or less.
[31] The polymer according to any one of [1] to [30], wherein, in a case where a base oil solution containing 2% by mass of the polymer is prepared, a kinematic viscosity at 40°C measured in accordance with ASTM D7279 (D445) is preferably 0 to 22.4 cSt, more preferably 5 cSt or more and less than 22.25 cSt, still more preferably 10 cSt or more and 22.00 cSt or less, and particularly preferably 15 to 21.50 cSt, and the base oil is a base oil of API standard Group III Plus.
[32] A lubricating oil additive comprising:
   the polymer according to any one of [1] to [31].
[33] A friction reducer for a lubricating oil, comprising:
   the polymer according to any one of [1] to [31]; and
   a base oil.
[34] The friction reducer for a lubricating oil according to [33], wherein the base oil is a base oil of API standard Group III, a base oil of API standard Group III Plus, or a base oil of API standard Group IV.
[35] The friction reducer for a lubricating oil according to [33] or [34], wherein a contained amount of the polymer is preferably 10% to 80% by mass, more preferably 15% to 70% by mass, and still more preferably 20% to 60% by mass, in a case where a total mass of the lubricating oil additive is 100% by mass.
[36] A lubricating oil composition comprising:
   the friction reducer for a lubricating oil according to any one of [33] to [35].
[37] The lubricating oil composition according to [36], wherein a contained amount of the polymer is preferably 0.01% to 30% by mass, more preferably 0.05% to 25% by mass, and still more preferably 0.1% to 20% by mass, in a case where a total mass of the lubricating oil composition is 100% by mass.
[38] Use of the polymer according to any one of [1] to [31] for producing a lubricating oil composition.
[39] Use of the polymer according to any one of [1] to [31] for reducing friction.
[40] Use of the polymer according to any one of [1] to [31] for improving lubricity.
[41] Use of a composition comprising:
   the polymer according to any one of [1] to [31] for reducing friction.
[42] Use of a composition comprising:
   the polymer according to any one of [1] to [31] for improving lubricity.
[43] The use according to [41] or [42], wherein the composition contains a solvent.
[44] The use according to [43], wherein the solvent is a base oil.
[45] The use according to [44], wherein the base oil is a base oil of API standard Group III, a base oil of API standard Group III Plus, or a base oil of API standard Group IV.
[46] The use according to any one of [41] to [45], wherein a contained amount of the polymer is preferably 0.01% to 30% by mass, more preferably 0.05% to 25% by mass, and still more preferably 0.1% to 20% by mass, in a case where a total mass of the composition is 100% by mass.

In addition, the present invention has the following aspects.
[1] A friction reducer for a lubricating oil, which contains a (meth)acrylic graft copolymer A having a main chain polymer structure and a side chain polymer structure, wherein the (meth)acrylic graft copolymer A contains, in the side chain polymer structure, a constitutional unit derived from an alkyl (meth)acrylate (a) having an alkyl group having 11 to 30 carbon atoms, and has a mass average molecular weight of 10000 to 90000.
[2] The friction reducer for a lubricating oil according to [1], wherein the (meth)acrylic graft copolymer A further contains a constitutional unit derived from an alkyl (meth)acrylate (b) having an alkyl group having 1 to 10 carbon atoms.
[3] The friction reducer for a lubricating oil according to [1], wherein the (meth)acrylic graft copolymer A contains a constitutional unit derived from a vinyl-based radical polymerizable monomer (m1) and a constitutional unit derived from a macromonomer (M).
[4] The friction reducer for a lubricating oil according to [3], wherein the macromonomer (M) contains a constitutional unit derived from the alkyl (meth)acrylate (a) having an alkyl group having 11 to 30 carbon atoms.
[5] The friction reducer for a lubricating oil according to [3], wherein the macromonomer (M) has a structure of Formula (1). 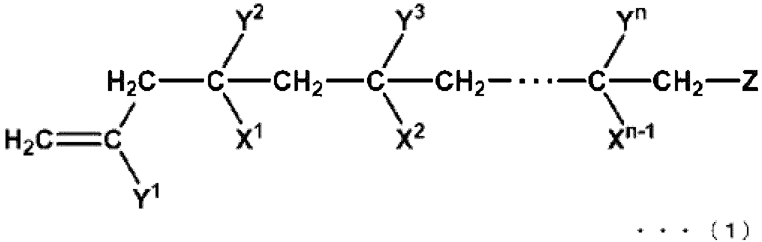 (In the formula, X¹ to Xⁿ⁻¹ each independently represent a hydrogen atom, a methyl group, or CH₂OH, and Y¹ to Yⁿ each independently represent a substituent other than X¹ to Xⁿ⁻¹ which is bonded to a vinyl group of a vinyl-based radical polymerizable monomer (m2) that is a monomeric constitutional unit of the macromonomer (M). Z represents a terminal group, and n represents an integer of 2 to 10000.)
[6] A lubricating oil composition comprising:
   the friction reducer for a lubricating oil according to any one of [1] to [5].

### EFFECTS OF THE INVENTION

According to the polymer of the present invention, it is possible to provide a polymer lubricating oil additive, a friction reducer for a lubricating oil, and a lubricating oil composition, which have a high friction reducing effect and a low viscosity.

### DETAILED DESCRIPTION OF THE PREFERRED EMBODIMENTS

Hereinafter, the present invention will be described in more detail. The following embodiments are merely examples for explaining the present invention and the present invention is not intended to be limited only to these embodiments. The present invention can be implemented in various aspects without departing from the spirit and scope of the invention.

In the present invention, the "(meth)acrylic" is a general term for "acrylic" and "methacrylic". The "(meth)acrylate" is a general term for "acrylate" and "methacrylate". The "(meth)acryloyl group" is a general term for an acryloyl group and a methacryloyl group, and is a group represented by CH₂=C(R)-C(=O)- (R represents a hydrogen atom or a methyl group). The "macromonomer" refers to a polymeric substance having a radical polymerizable group or an addition-reactive functional group. The "vinyl-based radical polymerizable monomer" refers to a monomer having an ethylenically unsaturated bond, which is not a macromonomer.

The polymer according to a first aspect of the present invention is a polymer including a main chain polymer structure and a side chain polymer structure, in which the side chain polymer structure contains a constitutional unit derived from an alkyl (meth)acrylate (a) having an alkyl group having 11 to 30 carbon atoms, and a mass average molecular weight of the polymer is 90000 or less.

The polymer according to a second aspect of the present invention is a polymer including a main chain polymer structure and a side chain polymer structure, in which the side chain polymer structure contains a constitutional unit derived from an alkyl (meth)acrylate (a) having an alkyl group having 11 to 30 carbon atoms, and in a case where a base oil solution containing 2% by mass of the polymer is prepared, a kinematic viscosity at 40°C measured in accordance with ASTM D7279 (D445) is 22.4 cSt or less, and the base oil is a base oil of API standard Group III Plus.

The polymer is preferably a graft copolymer in which at least a part of the constitutional units is a constitutional unit derived from a (meth)acrylic monomer. The polymer may further contain a constitutional unit derived from a monomer (for example, styrene) other than the (meth)acrylic monomer.

The polymer is preferably a graft copolymer composed of a main chain polymer structure and a side chain polymer structure (branch polymer structure) that is chemically bonded to the main chain polymer structure (trunk polymer structure). In the present specification, the graft copolymer is a polymer having one or more types of blocks connected as a side chain polymer structure to a main chain polymer structure. The structure of the main chain polymer and the structure of the side chain polymer may be different from each other or may be the same as each other. The method for producing the graft copolymer is not particularly limited, and examples thereof include a method in which a macromonomer having a radical polymerizable double bond at a terminal is produced as a side chain polymer structure, and is then subjected to radical polymerization with a monomer serving as a constitutional unit of a main chain polymer, a method in which a main chain polymer having a reaction point and a macromonomer having a reaction point are produced in advance, and then the main chain polymer and the macromonomer are reacted with each other, and a method in which, after producing a main chain polymer, a radical is generated on the main chain polymer using an initiator having a hydrogen abstraction ability, and a monomer serving as a constitutional unit of a side chain polymer is reacted to produce a side chain polymer structure.

It is preferable that the polymer contains a constitutional unit derived from an alkyl (meth)acrylate (a) having an alkyl group having 11 to 30 carbon atoms in a side chain polymer structure (hereinafter, also referred to as a "component (a)"), and has a mass average molecular weight of 10000 to 90000. Furthermore, the polymer can contain a constitutional unit derived from an alkyl (meth)acrylate (b) having an alkyl group having 1 to 10 carbon atoms (hereinafter, also referred to as a "component (b)").

The total contained amount of the component (a) and the component (b) as the constitutional units is preferably 70% by mass or more, more preferably 75% by mass or more, and still more preferably 80% by mass or more with respect to the total mass of the polymer.

The polymer contains a constitutional unit derived from the component (a) in the side chain polymer structure. The polymer may contain a constitutional unit derived from the component (a) in both the side chain polymer structure and the main chain polymer structure.

Examples of the component (a) include n-undecyl (meth)acrylate, i-undecyl (meth)acrylate, n-dodecyl (meth)acrylate, i-dodecyl (meth)acrylate, n-tridecyl (meth)acrylate, i-tridecyl (meth)acrylate, n-tetradecyl (meth)acrylate, i-tetradecyl (meth)acrylate, n-cetyl (meth)acrylate, i-cetyl (meth)acrylate, n-stearyl (meth)acrylate, i-stearyl (meth)acrylate, n-octadecyl (meth)acrylate, i-octadecyl (meth)acrylate, n-behenyl (meth)acrylate, and i-behenyl (meth)acrylate. These (meth)acrylate compounds may be used in combination of two or more thereof.

From the viewpoint of reducing the viscosity of the lubricating oil composition, the component (a) is preferably an alkyl (meth)acrylate having an alkyl group having 11 to 20 carbon atoms, more preferably an alkyl (meth)acrylate having an alkyl group having 11 to 18 carbon atoms, and still more preferably an alkyl (meth)acrylate having an alkyl group having 11 to 14 carbon atoms.

From the viewpoint of increasing the solubility of the polymer in a base oil, the component (a) is preferably an alkyl (meth)acrylate having an alkyl group having 11 to 20 carbon atoms, more preferably an alkyl methacrylate having an alkyl group having 11 to 20 carbon atoms, still more preferably an alkyl methacrylate having an alkyl group having 11 to 18 carbon atoms, and particularly preferably an alkyl methacrylate having an alkyl group having 11 to 14 carbon atoms.

From the viewpoint of increasing the friction reducing effect and the viewpoint of reducing the viscosity of the lubricating oil composition, the contained amount of the constitutional unit derived from the component (a) is preferably 20% to 98% by mass, more preferably 25% to 95% by mass, and still more preferably 30% to 90% by mass with respect to the total mass of the polymer.

Examples of the component (b) include alkyl (meth)acrylates having a linear alkyl group, such as methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, and n-nonyl (meth)acrylate; alkyl (meth)acrylates having a branched alkyl group, such as i-propyl (meth)acrylate, i-butyl (meth)acrylate, t-butyl (meth)acrylate, i-nonyl (meth)acrylate, n-decyl (meth)acrylate, i-decyl (meth)acrylate, and 2-ethylhexyl (meth)acrylate; and alkyl (meth)acrylates having a cyclic alkyl group, such as cyclopentyl (meth)acrylate, cyclohexyl (meth)acrylate, dicyclopentanyl (meth)acrylate, isobornyl (meth)acrylate, and 4-t-butylcyclohexyl (meth)acrylate. These (meth)acrylate compounds may be used in combination of two or more thereof.

From the viewpoint of increasing the friction reducing effect, the component (b) is preferably a (meth)acrylate having a linear or branched alkyl group, more preferably an alkyl acrylate having an alkyl group having 2 to 8 carbon atoms, still more preferably an alkyl acrylate having an alkyl group having 2 to 4 carbon atoms, and particularly preferably n-butyl acrylate.

From the viewpoint of increasing the friction reducing effect and the viewpoint of reducing the viscosity of the lubricating oil composition, the contained amount of the constitutional unit derived from the component (b) is preferably 3% to 80% by mass, more preferably 5% to 75% by mass, and still more preferably 10% to 70% by mass with respect to the total mass of the polymer.

From the viewpoint that the solubility of the polymer in a base oil can be made favorable, it is preferable that the polymer contains, as a constitutional unit, the constitutional unit derived from the component (a) in the side chain polymer structure, and it is more preferable that the polymer contains, as a constitutional unit, the constitutional unit derived from the component (a) in both the side chain polymer structure and the main chain polymer structure.

It is preferable that the polymer contains, as a constitutional unit, the constitutional unit derived from the component (b) in the side chain polymer structure, and it is more preferable that the polymer contains, as a constitutional unit, the constitutional unit derived from the component (b) in both the side chain polymer structure and the main chain polymer structure.

The mass average molecular weight (Mw) of the polymer is preferably 90000 or less. From the viewpoint of reducing the viscosity of the lubricating oil composition, the mass average molecular weight of the polymer is more preferably 10000 to 90000, still more preferably 12000 to 85000, particularly preferably 15000 to 80000, and most preferably 20000 to 75000.

The polymer may contain a constitutional unit derived from another radical polymerizable vinyl-based compound (hereinafter, also referred to as a "component (c)") other than the component (a) and the component (b). Examples of the other radical polymerizable vinyl-based compound include styrene, α-methylstyrene, p-t-butylstyrene, vinyl toluene, vinyl acetate, and a (meth)acrylate compound other than the component (a) and the component (b).

Examples of the (meth)acrylate compound other than the component (a) and the component (b) include alkyl (meth)acrylates having a hydroxyl group, such as 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, glycerin mono(meth)acrylate, ethylene glycol mono(meth)acrylate, and propylene glycol mono(meth)acrylate; alkyl (meth)acrylates containing a carboxy group, such as (meth)acrylic acid, 2-(meth)acryloyloxyethyl succinate, 2-(meth)acryloyloxyethyl maleate, 2-(meth)acryloyloxyethyl phthalate, and 2-(meth)acryloyloxyethyl hexahydrophthalate; alkyl (meth)acrylates having an aromatic ring structure, such as phenyl (meth)acrylate, benzyl (meth)acrylate, phenoxyethyl (meth)acrylate, phenoxydiethylene glycol (meth)acrylate, phenoxy polyethylene glycol (meth)acrylate, nonyl phenoxy polyethylene glycol (meth)acrylate, phenoxy polypropylene glycol (meth)acrylate, phenylphenyl (meth)acrylate, phenylphenoxyethyl (meth)acrylate, phenoxybenzyl (meth)acrylate, phenylbenzyl (meth)acrylate, naphthyl (meth)acrylate, and (1-naphthyl)methyl (meth)acrylate; alkyl (meth)acrylates having a heterocyclic structure, such as tetrahydrofurfuryl (meth)acrylate, glycidyl (meth)acrylate, and (meth)acryloylmorpholine; alkoxyalkyl (meth)acrylates, such as methoxyethyl (meth)acrylate, ethoxyethyl (meth)acrylate, and butoxyethyl (meth)acrylate; and 3-(meth)acryloxypropyltrimethoxysilane, 3-(meth)acryloxypropyltriethoxysilane, 2-(meth)acryloyloxyethyl acid phosphate, trifluoroethyl (meth)acrylate, heptadecafluorodecyl (meth)acrylate, dimethylaminoethyl (meth)acrylate, diethylaminoethyl (meth)acrylate, and (meth)acrylamide. These compounds may be used in combination of two or more thereof.

From the viewpoint of increasing the friction reducing effect and the viewpoint of reducing the viscosity of the lubricating oil composition, the contained amount of the constitutional unit derived from the component (c) is preferably 0% to 20% by mass, more preferably 0% to 10% by mass, and still more preferably 0% to 5% by mass with respect to the total mass of the polymer.

The total amount of the constitutional units derived from the components (a) to (c) does not exceed 100% by mass with respect to the total mass of the polymer.

The polymer may contain a constitutional unit derived from a vinyl-based radical polymerizable monomer (m1) (hereinafter, also referred to as a "component (m1)") and a constitutional unit derived from a macromonomer (M) (hereinafter, also referred to as a "component (M)").

Examples of the component (m1) include styrene, vinyl acetate, and a (meth)acrylate compound. Examples of the (meth)acrylate compound include alkyl (meth)acrylates having a linear alkyl group, such as methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-nonyl (meth)acrylate, n-decyl (meth)acrylate, n-undecyl (meth)acrylate, n-dodecyl (meth)acrylate, n-tridecyl (meth)acrylate, n-tetradecyl (meth)acrylate, n-cetyl (meth)acrylate, n-stearyl (meth)acrylate, and n-behenyl (meth)acrylate; alkyl (meth)acrylates having a branched alkyl group, such as i-propyl (meth)acrylate, i-butyl (meth)acrylate, t-butyl (meth)acrylate, s-butyl (meth)acrylate, isoamyl (meth)acrylate, 2-ethylhexyl (meth)acrylate, i-nonyl (meth)acrylate, i-decyl (meth)acrylate, 3-i-propylheptyl (meth)acrylate, i-undecyl (meth)acrylate, 2-t-butylheptyl (meth)acrylate, i-dodecyl (meth)acrylate, i-tridecyl (meth)acrylate, i-tetradecyl (meth)acrylate, and i-behenyl (meth)acrylate; alkyl (meth)acrylates having a cyclic alkyl group, such as cyclopentyl (meth)acrylate, cyclohexyl (meth)acrylate, isobornyl (meth)acrylate, dicyclopentenyl (meth)acrylate, dicyclopentenoxyethyl (meth)acrylate, dicyclopentanyl (meth)acrylate, and adamantyl (meth)acrylate; alkyl (meth)acrylates having a hydroxyl group, such as 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, glycerin mono(meth)acrylate, ethylene glycol mono(meth)acrylate, and propylene glycol mono(meth)acrylate; alkyl (meth)acrylates containing a carboxy group, such as (meth)acrylic acid, 2-(meth)acryloyloxyethyl succinate, 2-(meth)acryloyloxyethyl maleate, 2-(meth)acryloyloxyethyl phthalate, and 2-(meth)acryloyloxyethyl hexahydrophthalate; alkyl (meth)acrylates having an aromatic ring structure, such as phenyl (meth)acrylate, benzyl (meth)acrylate, phenoxyethyl (meth)acrylate, phenoxydiethylene glycol (meth)acrylate, phenoxy polyethylene glycol (meth)acrylate, nonyl phenoxy polyethylene glycol (meth)acrylate, phenoxy polypropylene glycol (meth)acrylate, phenylphenyl (meth)acrylate, phenylphenoxyethyl (meth)acrylate, phenoxybenzyl (meth)acrylate, phenylbenzyl (meth)acrylate, naphthyl (meth)acrylate, and (1-naphthyl)methyl (meth)acrylate; alkyl (meth)acrylates having a heterocyclic structure, such as tetrahydrofurfuryl (meth)acrylate, glycidyl (meth)acrylate, and (meth)acryloylmorpholine; alkoxyalkyl (meth)acrylates, such as methoxyethyl (meth)acrylate, ethoxyethyl (meth)acrylate, and butoxyethyl (meth)acrylate; and allyl (meth)acrylate, dicyclopentenyl (meth)acrylate, dicyclopentenyloxyethyl (meth)acrylate, 3-(meth)acryloxypropyltrimethoxysilane, 3-(meth)acryloxypropyltriethoxysilane, 2-(meth)acryloyloxyethyl acid phosphate, trifluoroethyl (meth)acrylate, heptadecafluorodecyl (meth)acrylate, dimethylaminoethyl (meth)acrylate, diethylaminoethyl (meth)acrylate, and (meth)acrylamide. These (meth)acrylate compounds may be used in combination of two or more thereof.

From the viewpoint of increasing the friction reducing effect, it is preferable for the component (m1) to contain the component (b), more preferably an alkyl acrylate having an alkyl group having 2 to 8 carbon atoms, still more preferably an alkyl acrylate having an alkyl group having 2 to 4 carbon atoms, and particularly preferably n-butyl acrylate.

From the viewpoint of increasing the solubility of the polymer in a base oil, it is preferable for the component (m1) to contain the component (a), more preferably an alkyl (meth)acrylate having an alkyl group having 11 to 20 carbon atoms, still more preferably an alkyl (meth)acrylate having an alkyl group having 11 to 18 carbon atoms, and particularly preferably an alkyl (meth)acrylate having an alkyl group having 11 to 14 carbon atoms.

The component (M) is a compound which contains two or more constitutional units derived from a monomer (m2) having a vinyl-based radical polymerizable group (hereinafter, also referred to as a "component (m2)") and has a radical polymerizable group at a terminal, and contains the component (a) as the component (m2). Examples of the component (m2) other than the component (a) include the compounds exemplified as the component (m1) above. From the viewpoint of increasing the solubility of the polymer in a base oil, the component (m2) is preferably an alkyl (meth)acrylate having an alkyl group having 11 to 20 carbon atoms, more preferably an alkyl methacrylate having an alkyl group having 11 to 20 carbon atoms, still more preferably an alkyl methacrylate having an alkyl group having 11 to 18 carbon atoms, and particularly preferably an alkyl methacrylate having an alkyl group having 11 to 14 carbon atoms. In addition, it is preferable that the component (b) is contained as the component (m2). From the viewpoint of increasing the solubility of the polymer in a base oil, the component (m2) is preferably a (meth)acrylate having a linear or branched alkyl group, more preferably an alkyl methacrylate having an alkyl group having 1 to 8 carbon atoms, still more preferably an alkyl methacrylate having an alkyl group having 1 to 4 carbon atoms, and particularly preferably methyl methacrylate.

From the viewpoint of increasing the solubility of the polymer in a base oil, the constitutional unit derived from the component (a) is contained in an amount of preferably 50% by mass or more, more preferably 60% by mass or more, still more preferably 70% by mass or more, and particularly preferably 80% by mass or more with respect to the total mass of the component (M).

Furthermore, from the viewpoint of radical polymerizability, the component (M) preferably has a structure represented by Formula (1).

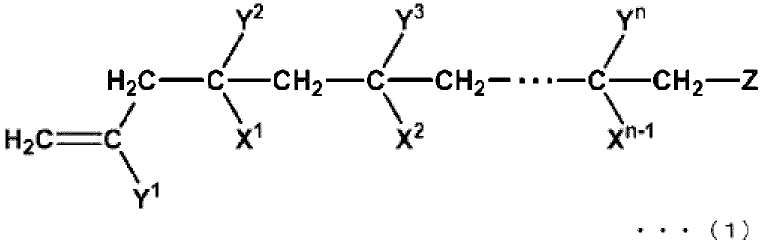

(In the formula, X¹ to Xⁿ⁻¹ each independently represent a hydrogen atom, a methyl group, or CH₂OH, and Y¹ to Yⁿ each independently represent a substituent other than X¹ to Xⁿ⁻¹ which is bonded to a vinyl group of the component (m2) that is a monomeric constitutional unit of the macromonomer (M). Z represents a terminal group, and n represents an integer of 2 to 10000.)

X¹ to Xⁿ⁻¹ and Y¹ to Yⁿ are each independently a substituent bonded to the vinyl group of the component (m2). Y¹ to Yⁿ each represent, for example, OR¹, a halogen atom, COR², COOR³, CN, CONR⁴R⁵, NHCOR⁶, or R⁷, and R¹ to R⁷ each independently represent a hydrogen atom, an alkyl group, an aryl group, a heteroaryl group, or the like.

The terminal group Z includes a hydrogen atom and a group derived from a radical polymerization initiator, similarly to a terminal group of a polymer obtained by known radical polymerization.

In addition, from the viewpoint of increasing the solubility of the polymer in a base oil and the viewpoint of increasing the friction reducing effect, the contained amount of the constitutional unit derived from the component (M) is preferably 1% to 70% by mass, more preferably 2% to 60% by mass, and still more preferably 5% to 50% by mass with respect to the total mass of the polymer.

The polymer may contain two or more types of constitutional units derived from the component (M).

From the viewpoint of increasing the solubility of the polymer in a base oil, the contained amount of the constitutional unit derived from the component (b) is preferably more than 0% by mass and 50% by mass or less, more preferably 0.5% to 40% by mass, still more preferably 1% to 30% by mass, and particularly preferably 1.5% to 20% by mass with respect to the total mass of the component (M).

From the viewpoint of increasing the solubility of the polymer in a base oil, the ratio represented by [the contained amount of the constitutional unit derived from the component (b)]/[the contained amount of the constitutional unit derived from the component (a)] in the component (M) is preferably 0.001 to 0.1, more preferably 0.005 to 0.05, and still more preferably 0.01 to 0.03.

From the viewpoint of increasing the solubility of the polymer in a base oil and the viewpoint of increasing the friction reducing effect, the mass average molecular weight (Mw) of the macromonomer (M) measured by gel permeation chromatography (GPC) is preferably 5000 or more and 50000 or less, more preferably 8000 or more and 40000 or less, and still more preferably 10000 or more and 30000 or less.

From the viewpoint of increasing the solubility of the polymer in a base oil and the viewpoint of increasing the friction reducing effect, the number-average molecular weight (Mn) of the component (M) measured by gel permeation chromatography is preferably 500 to 30000, more preferably 1000 to 25000, and particularly preferably 2000 to 20000.

From the viewpoint of increasing the solubility of the polymer in a base oil and the viewpoint of increasing the friction reducing effect, the molecular weight distribution (Mw/Mn) of the macromonomer (M) measured by gel permeation chromatography (GPC) is preferably 1.0 or more and 10 or less, more preferably 1.2 or more and 8 or less, and still more preferably 1.5 or more and 5 or less.

The component (M) may be one produced by a known method or may be a commercially available product. Examples of the method for producing the component (M) include a production method using a cobalt chain transfer agent (United States Patent No. 4680352), a method using an α-substituted unsaturated compound such as α-bromomethylstyrene as a chain transfer agent (PCT International Publication No. WO88/04304), a method for chemically bonding polymerizable groups (Japanese Unexamined Patent Application, First Publication No. S60-133007 and United States Patent No. 5147952), and a method using thermal decomposition (Japanese Unexamined Patent Application, First Publication No. H11-240854).

The production method using a cobalt chain transfer agent is preferable in terms of having fewer production steps and using a catalyst with a high chain transfer constant. Since the cobalt chain transfer agent has a high chain transfer constant, a macromonomer with a controlled molecular weight can be obtained with the addition of a small amount of the agent.

A known cobalt complex can be used as the cobalt chain transfer agent. The amount of the cobalt chain transfer agent is preferably 0.00001 to 0.1 parts by mass, more preferably 0.00005 to 0.05 parts by mass, and particularly preferably 0.0001 to 0.02 parts by mass with respect to 100 parts by mass of the component (m2).

In addition, from the viewpoint of increasing the solubility of the polymer in a base oil and the viewpoint of increasing the friction reducing effect, the number-average molecular weight (Mn) of the polymer contained in the friction reducer for a lubricating oil according to the embodiment of the present invention, which is measured by gel permeation chromatography (GPC), is preferably 5000 or more and 50000 or less, more preferably 7000 or more and 40000 or less, and still more preferably 10000 or more and 30000 or less.

In addition, from the viewpoint of increasing the solubility of the polymer in a base oil and the viewpoint of increasing the friction reducing effect, the molecular weight distribution (Mw/Mn) of the polymer contained in the friction reducer for a lubricating oil according to the embodiment of the present invention, which is measured by gel permeation chromatography (GPC), is preferably 1.0 or more and 20 or less, more preferably 1.5 or more and 15 or less, and still more preferably 2.0 or more and 10 or less.

Next, an example of the method for producing the friction reducer for a lubricating oil according to the embodiment of the present invention will be shown.

The friction reducer for a lubricating oil according to the embodiment of the present invention can be produced by polymerizing a monomer mixture containing the component (m1) and the component (M) in a base oil by a known method.

The base oil is not particularly limited and examples thereof include a base oil of API standard Group III such as YUBASE 3 manufactured by SK Lubricants Co., Ltd., a base oil of API standard Group III Plus such as YUBASE 4 manufactured by SK Lubricants Co., Ltd., and a base oil of API standard Group IV such as polyalphaolefin.

In addition, the component (M) is preferably a macromonomer obtained by polymerizing a monomer mixture containing a vinyl-based radical polymerizable monomer in the base oil using a cobalt chain transfer agent. Since the cobalt chain transfer agent has a high chain transfer constant, a macromonomer with a controlled molecular weight can be obtained with the addition of a small amount of the agent.

In addition, the polymerization may be carried out under known conditions, and it is preferable to use an α-methylstyrene dimer as a chain transfer agent since it is particularly excellent in the effect of suppressing heat generation during polymerization.

The friction reducer for a lubricating oil containing the polymer according to the embodiment of the present invention can be used as a friction reducer for a lubricating oil to be added to lubricating oils such as engine oils, drive system oils (gear oils, transmission oils), hydraulic oils, and metalworking oils, which are used in mobility such as automobiles and ships, and industrial machines, robots, and the like.

Examples of base oils for the lubricating oils include mineral-based base oils refined from crude oil and chemically synthesized synthetic oils, examples of which include base oils of API standard Group III such as YUBASE 3 manufactured by SK Lubricants Co., Ltd., base oils of API standard Group III Plus such as YUBASE 4 manufactured by SK Lubricants Co., Ltd., and base oils of API standard Group IV such as polyalphaolefin.

The lubricating oil composition according to the embodiment of the present invention contains the friction reducer for a lubricating oil according to the embodiment of the present invention. The lubricating oil composition according to the embodiment of the present invention may contain other additives in addition to the friction reducer for a lubricating oil according to the embodiment of the present invention. Examples of the other additives include an antioxidant, a viscosity index improver, a pour-point depressant, a detergent-dispersant, a corrosion inhibitor, a rust inhibitor, an antifoaming agent, an emulsifier, a fungicide, and a demulsifier. In addition, as the friction reducer other than that of the present invention, oiliness improvers such as long-chain fatty acid esters and fatty acid amides, anti-wear agents such as phosphate esters and zinc dithiophosphates, extreme pressure agents such as organic sulfur compounds and organic halogen compounds, friction adjusters such as organic molybdenum compounds, and the like may be contained.

In addition, the lubricating oil composition according to the embodiment of the present invention may be a grease containing a thickener. Examples of the thickener include soap-based thickeners (such as lithium soap, calcium soap, sodium soap, and aluminum soap), inorganic thickeners (such as bentonite and silica gel), and organic thickeners (such as polyurea and polyurethane).

The contained amount of the polymer according to the embodiment of the present invention contained in the lubricating oil composition is preferably 0.01% to 30% by mass, more preferably 0.05% to 25% by mass, and still more preferably 0.1% to 20% by mass with respect to 100% by mass of the lubricating oil composition. In a case where the contained amount of the friction reducer for a lubricating oil is set to 0.01% by mass or more, the friction reducing effect can be increased. In a case where the contained amount of the friction reducer for a lubricating oil is set to 30% by mass or less, the viscosity of the lubricating oil composition can be reduced.

In a case where a base oil solution containing 2% by mass of the polymer is prepared, the friction coefficient measured at 40°C using an SRV5 tester (manufactured by Optimol Instruments Pruftechnik GmbH) is preferably 0.16 or less, more preferably less than 0.138, and still more preferably 0.135 or less.

In a case where a base oil solution containing 2% by mass of the polymer is prepared, the kinematic viscosity at 40°C measured in accordance with ASTM D7279 (D445) is preferably 0 to 22.4 cSt, more preferably 5 to 22.25 cSt, still more preferably 10 to 22.00 cSt, and particularly preferably 15 to 21.50 cSt.

The base oil is a base oil of API standard Group III Plus.

### EXAMPLES

Hereinafter, the present invention will be described in more detail with reference to Examples and Comparative Examples. In the Examples, "parts" represents "parts by mass". The evaluation was carried out by the following method. In addition, in Tables 1 to 6, the contained amount of the constitutional unit derived from each monomer is shown in % by mass. The contained amount of each constitutional unit was calculated from the mass of the monomer with respect to the total mass of the monomers used in the polymerization reaction.

### <Molecular weight of macromonomer (M)>

The measurement was carried out using gel permeation chromatography (GPC) (HLC-8320, manufactured by Tosoh Corporation). After preparing a 0.2% by mass tetrahydrofuran solution of the macromonomer (M), 10 µl of the solution was injected into an apparatus equipped with columns manufactured by Tosoh Corporation (TSKgel SuperHZM-M (inner diameter: 4.6 mm, length: 15 cm), HZM-M (inner diameter: 4.6 mm, length: 15 cm), HZ-2000 (inner diameter: 4.6 mm, length: 15 cm), and TSK guard column Super HZ-L (inner diameter: 4.6 mm, length: 3.5 cm)), the measurement was carried out under the conditions of a flow rate: 0.35 ml/min, an eluent: tetrahydrofuran (stabilizer: BHT), and a column temperature: 40°C, and Mw, Mn, and Mw/Mn were calculated in terms of standard polystyrene.

### <Molecular weight of polymer>

The measurement was carried out using gel permeation chromatography (GPC) (HLC-8320, manufactured by Tosoh Corporation). After preparing 0.2% by mass of a tetrahydrofuran solution of the polymer obtained in each of Examples, 10 µl of the solution was injected into an apparatus equipped with columns manufactured by Tosoh Corporation (two TSKgel SuperHZM-H (inner diameter: 6.0 mm, length: 15 cm) and TSK guard column Super HZ-H (inner diameter: 4.6 mm, length: 3.5 cm)), and the measurement was carried out under the conditions of a flow rate: 0.5 ml/min, an eluent: tetrahydrofuran (stabilizer: BHT), and a column temperature: 40°C, and the mass average molecular weight (Mw), the number-average molecular weight (Mn), and the molecular weight distribution (Mw/Mn) were calculated in terms of standard polystyrene.

### <Kinematic viscosity at 40°C>

A YUBASE 4 solution containing 2% by mass of the obtained polymer was prepared, and the kinematic viscosity at 40°C was evaluated in accordance with ASTM D7279 (D445) using a fully automatic simple kinematic viscometer (trade name: Simple-VIS type, manufactured by Cannon Instrument Company).

### <Friction coefficient at 40°C>

A YUBASE 4 solution containing 2% by mass of the obtained polymer was prepared, and the friction coefficient at 40°C was measured using an SRV5 tester (manufactured by Optimol Instruments Pruftechnik GmbH). The measurement conditions were as follows and the friction coefficient after 60 minutes from the start of the measurement was evaluated.
· Test method: ball-on-disk (diameter of ball: 10 mm, material for ball and disk: SUJ2)
· Test mode: reciprocation (50 Hz, stroke: 1 mm)
· Load: 200 N

### [Production Example 1]

### (Synthesis of Co complex (cobalt chain transfer agent))

In a synthesis apparatus equipped with a stirrer, in a nitrogen atmosphere, 2.00 g (8.03 mmol) of cobalt (II) acetate tetrahydrate (Wako special grade, manufactured by FUJIFILM Wako Pure Chemical Corporation), 3.86 g (16.1 mmol) of diphenylglyoxime (EP grade, manufactured by Tokyo Chemical Industry Co., Ltd.), and 100 ml of diethyl ether that had been deoxygenated in advance by nitrogen bubbling were placed and stirred at 25°C for 2 hours.

Next, 20 ml of a boron trifluoride diethyl ether complex (EP grade, manufactured by Tokyo Chemical Industry Co., Ltd.) was added thereto, followed by further stirring for 6 hours. The obtained product was filtered and the solid was washed with diethyl ether and dried at 100 MPa or less for 12 hours at 20°C to obtain 5.02 g (7.93 mmol, yield: 99% by mass) of a Co complex as a dark brown solid.

### [Production Example 2]

### (Synthesis of macromonomer M1)

58 parts of YUBASE 4, 98 parts of Acrylic Ester SL (trade name: Acrylic Ester SL, manufactured by Mitsubishi Chemical Corporation, a mixture of alkyl methacrylate having an alkyl group having 12 carbon atoms and alkyl methacrylate having an alkyl group having 13 carbon atoms), 2 parts of methyl methacrylate (MMA), and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-butyl peroxy-2-ethylhexanoate (trade name: LUPEROX 26, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M1. The results of GPC of the obtained macromonomer M1 are shown in Table 1.

### [Production Example 3]

### (Synthesis of macromonomer M2)

58 parts of YUBASE 4, 98 parts of Acrylic Ester SL, 2 parts of MMA, and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-amyl peroxy-2-ethylhexanoate (trade name: LUPEROX 575, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M2. The results of GPC of the obtained macromonomer M2 are shown in Table 1.

### [Production Example 4]

### (Synthesis of macromonomer M3)

58 parts of YUBASE 4, 98 parts of n-stearyl methacrylate (trade name: Light Ester S, manufactured by Kyoeisha Chemical Co., Ltd.), 2 parts of methyl methacrylate (MMA), and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and LUPEROX 26 (0.2 parts) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M3. The results of GPC of the obtained macromonomer M3 are shown in Table 1.

### [Production Example 5]

### (Synthesis of macromonomer M4)

58 parts of YUBASE 4, 98 parts of lauryl methacrylate (trade name: Acrylic Ester L, manufactured by Mitsubishi Chemical Corporation), 2 parts of methyl methacrylate (MMA), and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and LUPEROX 26 (0.4 parts) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M4. The results of GPC of the obtained macromonomer M4 are shown in Table 1.

### [Production Example 6]

### (Synthesis of macromonomer M5)

58 parts of YUBASE 4, 98 parts of Acrylic Ester SL, 2 parts of MMA, and 0.0075 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-amyl peroxy-2-ethylhexanoate (trade name: LUPEROX 575, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M5. The results of GPC of the obtained macromonomer M5 are shown in Table 1.

### [Production Example 7]

### (Synthesis of macromonomer M6)

58 parts of YUBASE 4, 100 parts of 2-ethylhexyl methacrylate, and 0.003 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-amyl peroxy-2-ethylhexanoate (trade name: LUPEROX 575, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 575 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M6. The results of GPC of the obtained macromonomer M6 are shown in Table 1.

### <Example 1>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 19 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 2. In Tables 2 to 6, the polymer formulations also include the constitutional units in the macromonomer (M).

### <Example 2>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 19 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 3>

30 parts of YUBASE 4 and 9.5 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 71 parts of n-butyl acrylate, 24 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (56.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 4>

40 parts of YUBASE 4, 66.7 parts of the YUBASE 4 solution of the macromonomer M2 obtained in Production Example 3, 49 parts of n-butyl acrylate, 16 parts of lauryl acrylate, 0.03 parts of LUPEROX 26 as a polymerization initiator, and 0.7 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 42 parts of YUBASE 4 was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 5>

50 parts of YUBASE 4, 47.6 parts of the YUBASE 4 solution of the macromonomer M1 obtained in Production Example 2, 45 parts of n-butyl acrylate, 30 parts of lauryl acrylate, 0.03 parts of LUPEROX 26 as a polymerization initiator, and 0.9 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto. and the mixture was cooled to obtain a YUBASE 4 solution containing 35% by mass of a (meth)acrylic graft copolymer. The evaluation results of the obtained friction reducer for a lubricating oil are shown in Table 2.

### <Example 6>

50 parts of YUBASE 4, 47.6 parts of the YUBASE 4 solution of the macromonomer M1 obtained in Production Example 2, 30 parts of n-butyl acrylate, 45 parts of lauryl acrylate, 0.03 parts of LUPEROX 26 as a polymerization initiator, and 0.9 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 7>

50 parts of YUBASE 4, 47.6 parts of the YUBASE 4 solution of the macromonomer M1 obtained in Production Example 2, 20 parts of n-butyl acrylate, 55 parts of lauryl acrylate, 0.03 parts of LUPEROX 26 as a polymerization initiator, and 0.9 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto. and the mixture was cooled to obtain a YUBASE 4 solution containing 35% by mass of a (meth)acrylic graft copolymer. The evaluation results of the obtained friction reducer for a lubricating oil are shown in Table 2.

### <Example 8>

50 parts of YUBASE 4, 47.6 parts of the YUBASE 4 solution of the macromonomer M1 obtained in Production Example 2, 30 parts of ethyl acrylate (manufactured by Mitsubishi Chemical Corporation), 45 parts of lauryl acrylate, 0.03 parts of LUPEROX 26 as a polymerization initiator, and 0.9 parts of α-methylstyrene dimer (trade name: NOFMER MSD, manufactured by NOF Corporation) as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 9>

50 parts of YUBASE 4, 47.6 parts of the YUBASE 4 solution of the macromonomer M3 obtained in Production Example 4, 56 parts of n-butyl acrylate, 19 parts of lauryl acrylate, 0.03 parts of LUPEROX 26 as a polymerization initiator, and 0.9 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 10>

50 parts of YUBASE 4, 47.6 parts of the YUBASE 4 solution of the macromonomer M4 obtained in Production Example 5, 56 parts of n-butyl acrylate, 19 parts of lauryl acrylate, 0.03 parts of LUPEROX 26 as a polymerization initiator, and 0.9 parts of α-methylstyrene dimer (trade name: NOFMER MSD, manufactured by NOF Corporation) as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto, and the mixture was cooled to obtain a YUBASE 4 solution containing 35% by mass of a (meth)acrylic graft copolymer. The evaluation results of the obtained friction reducer for a lubricating oil are shown in Table 2.

### <Example 11>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 19 parts of lauryl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 12>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 50 parts of n-butyl acrylate, 25 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 13>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 20 parts of n-butyl acrylate, 25 parts of lauryl acrylate, 30 parts of n-butyl methacrylate (trade name: Acrylic Ester B, manufactured by Mitsubishi Chemical Corporation), 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 14>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 20 parts of n-butyl acrylate, 25 parts of lauryl acrylate, 30 parts of Acrylic Ester B, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 15>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 45 parts of n-butyl acrylate, 30 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 16>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 60 parts of n-butyl acrylate, 15 parts of lauryl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 17>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 64 parts of n-butyl acrylate, 11 parts of lauryl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 18>

30 parts of YUBASE 4 and 95.2 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 50 parts of n-butyl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (35.4 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 19>

30 parts of YUBASE 4 and 38.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 60 parts of n-butyl acrylate, 20 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (62.5 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 20>

30 parts of YUBASE 4 and 19 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 67 parts of n-butyl acrylate, 23 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (71.6 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 3.

### <Example 21>

50 parts of YUBASE 4 and 9.5 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 71 parts of n-butyl acrylate, 24 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (56.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 22>

30 parts of YUBASE 4 and 47.6 parts of the YUBASE 4 solution of the macromonomer M5 obtained in Production Example 6 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 19 parts of lauryl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 23>

30 parts of YUBASE 4 and 47.6 parts of the YUBASE 4 solution of the macromonomer M5 obtained in Production Example 6 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 45 parts of n-butyl acrylate, 30 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 24>

30 parts of YUBASE 4 and 47.6 parts of the YUBASE 4 solution of the macromonomer M5 obtained in Production Example 6 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 64 parts of n-butyl acrylate, 11 parts of lauryl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 25>

30 parts of YUBASE 4 and 95.2 parts of the YUBASE 4 solution of the macromonomer M5 obtained in Production Example 6 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 50 parts of n-butyl acrylate, 0.1 parts of LUPEROX 575 as a polymerization initiator, and 1.2 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (35.4 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 26>

50 parts of YUBASE 4, 47.6 parts of the YUBASE 4 solution of the macromonomer M2 obtained in Production Example 3, 56 parts of 2-ethylhexyl acrylate (manufactured by Mitsubishi Chemical Corporation), 19 parts of lauryl acrylate, 0.03 parts of LUPEROX 26 as a polymerization initiator, and 1.2 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and PEROCTA O (0.5 parts) was added dropwise thereto over 1 hour. Thereafter, the temperature was raised to 110°C and maintained at that temperature for 1 hour, 41.1 parts of YUBASE 4 was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 27>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 19 parts of lauryl acrylate, 1 part of LUPEROX 575 as a polymerization initiator, and 1.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 28>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 18 parts of lauryl acrylate, 1 part of 4-hydroxybutyl acrylate (trade name: 4HBA, manufactured by Mitsubishi Chemical Corporation), 0.1 parts of LUPEROX 575 as a polymerization initiator, and 1.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 29>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 54 parts of n-butyl acrylate, 18 parts of lauryl acrylate, 3 parts of 4-hydroxybutyl acrylate (trade name: 4HBA, manufactured by Mitsubishi Chemical Corporation), 3 parts of LUPEROX 575 as a polymerization initiator, and 4 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 4.

### <Example 30>

30 parts of YUBASE 4 and 95.2 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 50 parts of n-butyl acrylate, 1 part of LUPEROX 575 as a polymerization initiator, and 1.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours.

The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 5.

### <Example 31>

30 parts of YUBASE 4 and 95.2 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 47 parts of n-butyl acrylate, 3 parts of 4-hydroxybutyl acrylate, 0.5 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 5.

### <Example 32>

30 parts of YUBASE 4 and 95.2 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 47 parts of n-butyl acrylate, 3 parts of 4-hydroxybutyl acrylate, 0.1 parts of LUPEROX 575 as a polymerization initiator, and 1.3 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 5.

### <Example 33>

30 parts of YUBASE 4 and 133.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 30 parts of YUBASE 4, 30 parts of n-butyl acrylate, 0.5 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (20 parts) and LUPEROX 575 (0.5 parts) was added dropwise thereto over 1.5 hours. The temperature was raised to 110°C and maintained at that temperature for 1 hour, YUBASE 4 (44.5 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 5.

### <Example 34>

30 parts of YUBASE 4 and 133.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 30 parts of YUBASE 4, 27 parts of n-butyl acrylate, 3 parts of 4-hydroxybutyl acrylate, 1 part of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (20 parts) and LUPEROX 575 (0.5 parts) was added dropwise thereto over 1.5 hours. The temperature was raised to 110°C and maintained at that temperature for 1 hour, YUBASE 4 (44.5 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 5.

### <Example 35>

10 parts of YUBASE 4 and 171.0 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 30 parts of YUBASE 4, 10 parts of n-butyl acrylate, and 0.3 parts of LUPEROX 575 as a polymerization initiator was added dropwise thereto over 4 hours. After the temperature was maintained at 85°C for 1 hour, a mixed liquid of YUBASE 4 (45 parts) and LUPEROX 575 (0.5 parts) was added dropwise thereto over 1.5 hours. The temperature was raised to 110°C and maintained at that temperature for 1 hour, YUBASE 4 (22.5 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 5.

### <Comparative Example 1>

50 parts of YUBASE 4, 47.6 parts of the YUBASE 4 solution of the macromonomer M1 obtained in Production Example 2, 56 parts of n-butyl acrylate, 19 parts of lauryl acrylate, 0.03 parts of LUPEROX 26 as a polymerization initiator, and 0.1 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (30 parts) and 1,1,3,3-tetramethylbutyl peroxy-2-ethylhexanoate (trade name: PEROCTA O, manufactured by NOF Corporation) (0.5 parts) was added dropwise thereto over 1 hour. Thereafter, the temperature was raised to 110°C and maintained at that temperature for 1 hour, after which 41.1 parts of YUBASE 4 was added thereto, and the mixture was cooled to obtain a YUBASE 4 solution containing 35% by mass of the polymer. The evaluation results of the obtained friction reducer for a lubricating oil are shown in Table 6.

### <Comparative Example 2>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 13 parts of n-butyl acrylate, 62 parts of lauryl acrylate, 0.1 parts of LUPEROX 575 as a polymerization initiator, and 0.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the obtained friction reducer for a lubricating oil are shown in Table 6.

### <Comparative Example 3>

72.6 parts of YUBASE 4, 45 parts of n-butyl acrylate, 30 parts of lauryl acrylate, 24.5 parts of Acrylic Ester SL, 0.5 parts of MMA, 0.03 parts of LUPEROX 26 as a polymerization initiator, and 0.15 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (60 parts) and 1,1,3,3-tetramethylbutyl peroxy-2-ethylhexanoate (trade name: PEROCTA O, manufactured by NOF Corporation) (0.5 parts) was added dropwise thereto over 1 hour. Thereafter, the temperature was raised to 110°C and maintained at that temperature for 1 hour, after which 11.1 parts of YUBASE 4 was added thereto, and the mixture was cooled to obtain a YUBASE 4 solution containing 35% by mass of the polymer. The evaluation results of the obtained friction reducer for a lubricating oil are shown in Table 6.

### <Comparative Example 4>

6.9 parts of YUBASE 4, 47.6 parts of the YUBASE 4 solution of the macromonomer M1 obtained in Production Example 2, 45 parts of n-butyl methacrylate (trade name: Acrylic Ester B, manufactured by Mitsubishi Chemical Corporation), 30 parts of lauryl acrylate, 0.15 parts of LUPEROX 26 as a polymerization initiator, and 0.025 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (67.5 parts) and PEROCTA O (0.5 parts) was added dropwise thereto over 1 hour.

Thereafter, the temperature was raised to 110°C and maintained at that temperature for 1 hour, after which 46.7 parts of YUBASE 4 was added thereto, and the mixture was cooled to obtain a YUBASE 4 solution containing 35% by mass of the polymer. The evaluation results of the obtained friction reducer for a lubricating oil are shown in Table 6.

### <Comparative Example 5>

6.9 parts of YUBASE 4, 47.6 parts of the YUBASE 4 solution of the macromonomer M1 obtained in Production Example 2, 35 parts of n-butyl methacrylate (trade name: Acrylic Ester B, manufactured by Mitsubishi Chemical Corporation), 40 parts of lauryl acrylate, 0.15 parts of LUPEROX 26 as a polymerization initiator, and 0.025 parts of α-methylstyrene dimer as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and LUPEROX 26 (0.015 parts) was added dropwise thereto over 2 hours. Further, after the temperature was maintained at 85°C for 1 hour, a mixed liquid consisting of YUBASE 4 (67.5 parts) and PEROCTA O (0.5 parts) was added dropwise thereto over 1 hour.

Thereafter, the temperature was raised to 110°C and maintained at that temperature for 1 hour, after which 46.7 parts of YUBASE 4 was added thereto, and the mixture was cooled to obtain a YUBASE 4 solution containing 35% by mass of the polymer. The evaluation results of the obtained friction reducer for a lubricating oil are shown in Table 6.

### <Comparative Example 6>

30 parts of YUBASE 4 and 47.6 parts of the YUBASE 4 solution of the macromonomer M6 obtained in Production Example 7 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of 25 parts of YUBASE 4, 56 parts of n-butyl acrylate, 19 parts of lauryl acrylate, 0.5 parts of LUPEROX 575 as a polymerization initiator, and 1.9 parts of NOFMER MSD as a chain transfer agent was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, YUBASE 4 (58.1 parts) was added thereto, and the mixture was cooled to obtain a YUBASE 4 solution containing 35% by mass of a (meth)acrylic graft copolymer. The evaluation results of the obtained friction reducer for a lubricating oil are shown in Table 6.

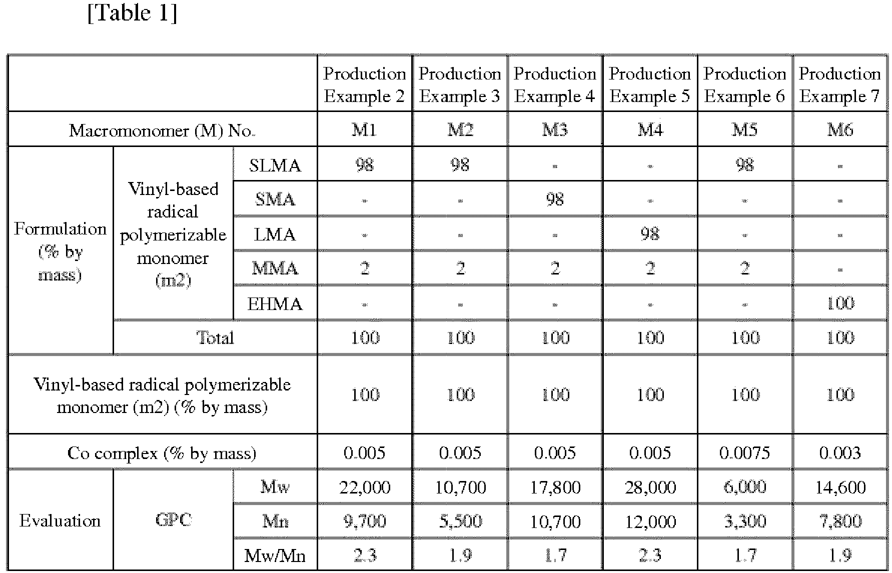

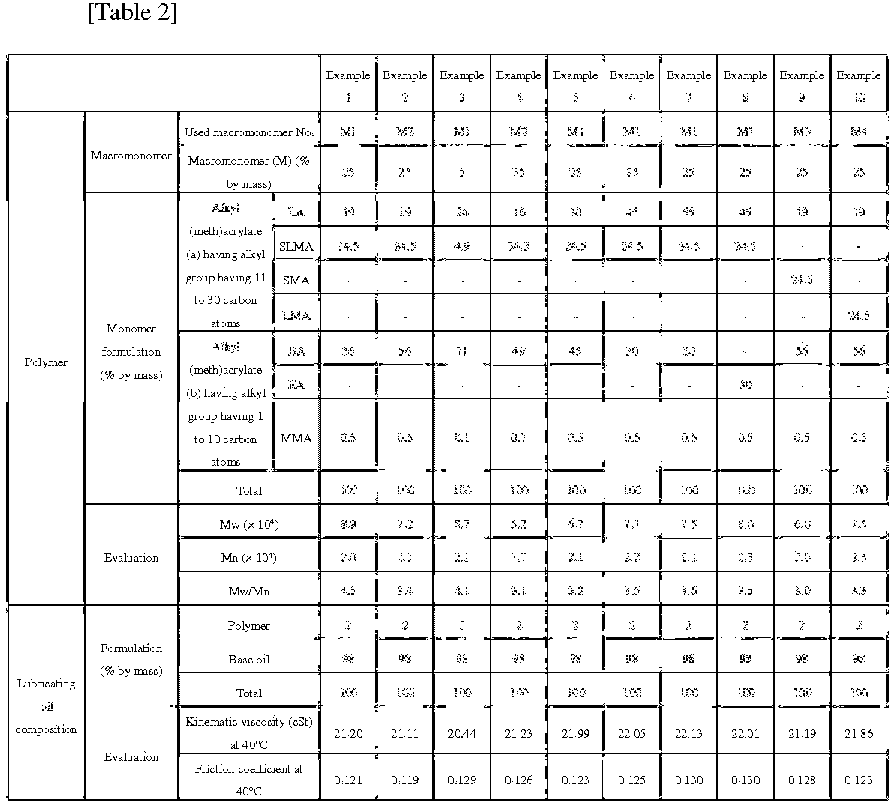

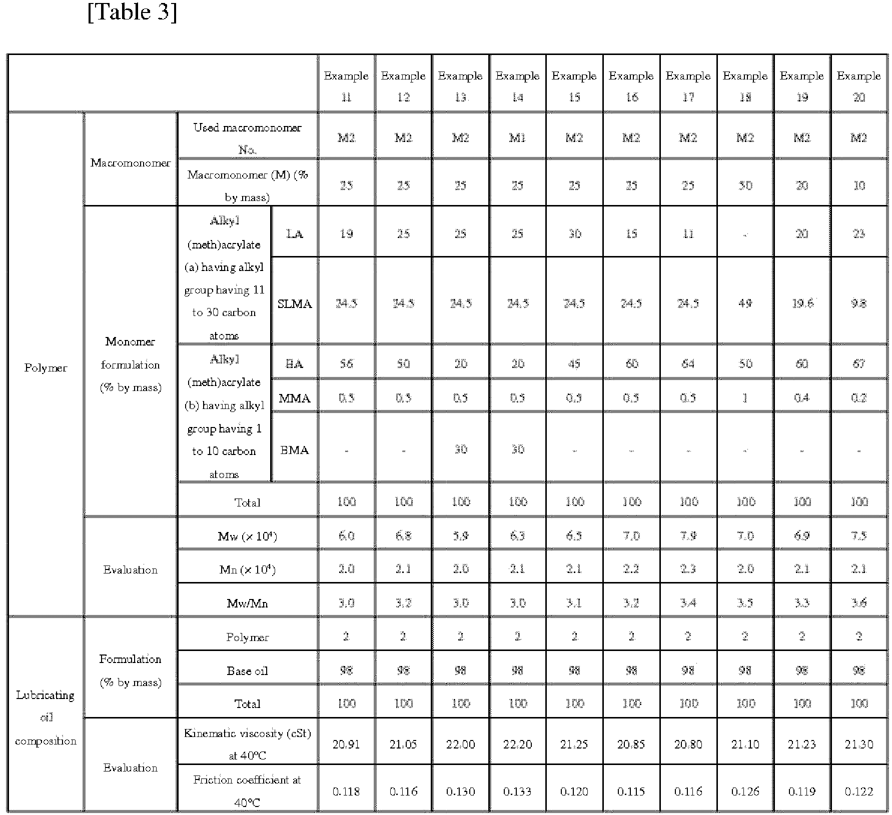

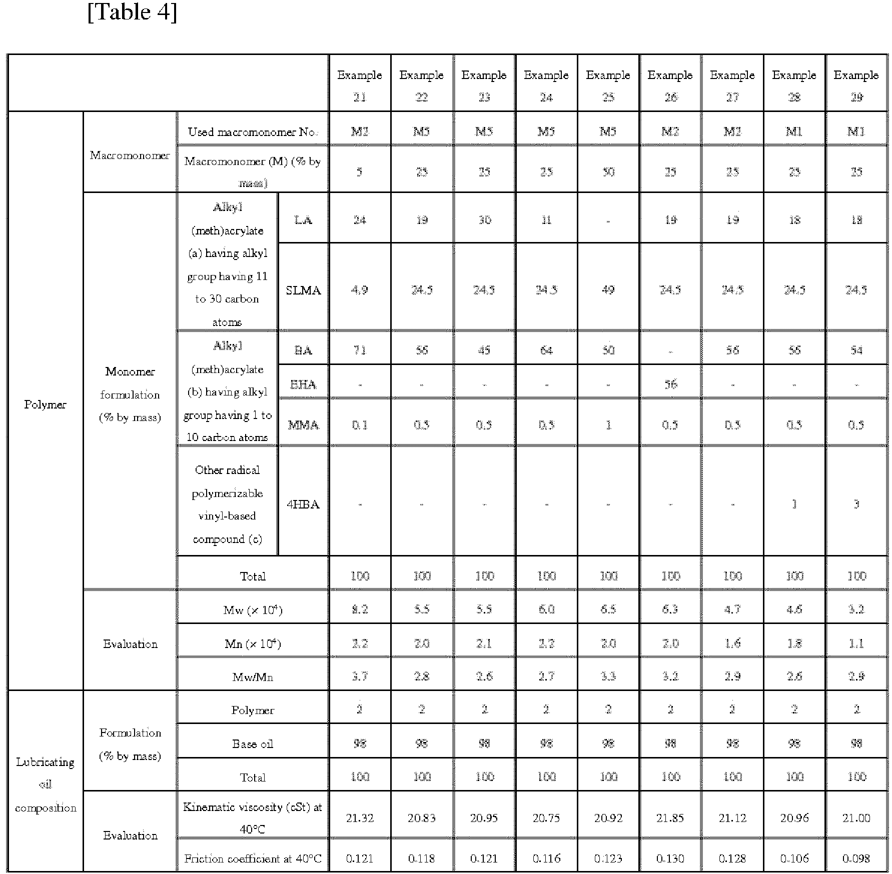

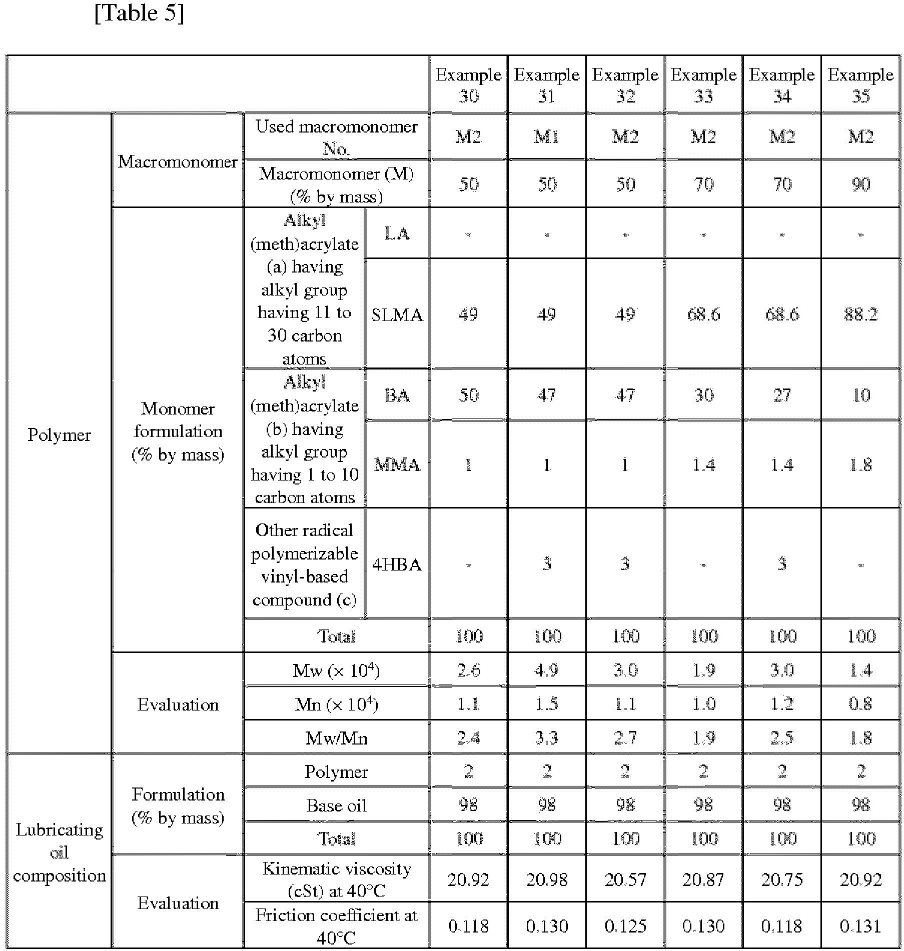

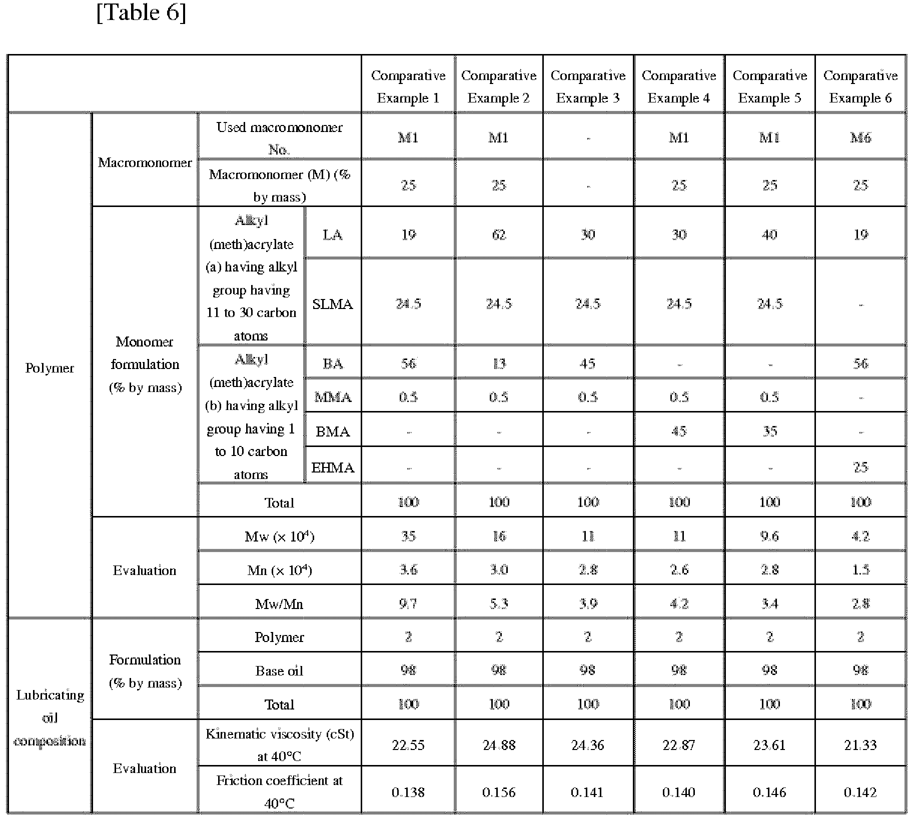

The abbreviations in Tables 1 to 6 are as follows.
· SLMA: a mixture of an alkyl methacrylate having an alkyl group having 12 carbon atoms and an alkyl methacrylate having an alkyl group having 13 carbon atoms (trade name: Acrylic Ester SL, manufactured by Mitsubishi Chemical Corporation)
· SMA: n-stearyl methacrylate (trade name: Light Ester S, manufactured by Kyoeisha Chemical Co., Ltd.)
· LMA: lauryl methacrylate (trade name: Acrylic Ester L, manufactured by Mitsubishi Chemical Corporation)
· MMA: methyl methacrylate (trade name: Acrylic Ester M, manufactured by Mitsubishi Chemical Corporation)
· EHMA: 2-ethylhexyl methacrylate (trade name: Acrylic Ester EH, manufactured by Mitsubishi Chemical Corporation)
· M1: a macromonomer synthesized in Production Example 2
· M2: a macromonomer synthesized in Production Example 3
· M3: a macromonomer synthesized in Production Example 4
· M4: a macromonomer synthesized in Production Example 5
· M5: a macromonomer synthesized in Production Example 6
· M6: a macromonomer synthesized in Production Example 7
· LA: lauryl acrylate (trade name: LA, manufactured by Osaka Organic Chemical Industry Ltd.)
· EHA: 2-ethylhexyl acrylate (manufactured by Mitsubishi Chemical Corporation)
· BA: n-butyl acrylate (manufactured by Mitsubishi Chemical Corporation)
· EA: ethyl acrylate (manufactured by Mitsubishi Chemical Corporation)
· BMA: n-butyl methacrylate (trade name: Acrylic Ester B, manufactured by Mitsubishi Chemical Corporation)

As is clear from Tables 2 to 6, the friction reducer for a lubricating oil obtained in each of Examples had a low kinematic viscosity and a high effect of reducing the friction coefficient. On the other hand, the friction reducer for a lubricating oil obtained in each of Comparative Examples had a high kinematic viscosity and a low effect of reducing the friction coefficient.

### Industrial Applicability

According to the present invention, it is possible to provide a polymer that can provide a polymer lubricating oil additive, a friction reducer for a lubricating oil, and a lubricating oil composition, which have a high friction reducing effect and a low viscosity.

## Claims

1. A polymer comprising:
a main chain polymer structure; and
a side chain polymer structure,
wherein the side chain polymer structure contains a constitutional unit derived from an alkyl (meth)acrylate (a) having an alkyl group having 11 to 30 carbon atoms, and
a mass average molecular weight of the polymer is 90000 or less.

2. The polymer according to Claim 1, wherein, in a case where a base oil solution containing 2% by mass of the polymer is prepared, a kinematic viscosity at 40°C measured in accordance with ASTM D7279 (D445) is 22.4 cSt or less, and
the base oil is a base oil of API standard Group III Plus.

3. A polymer comprising:
a main chain polymer structure; and
a side chain polymer structure,
wherein the side chain polymer structure contains a constitutional unit derived from an alkyl (meth)acrylate (a) having an alkyl group having 11 to 30 carbon atoms,
in a case where a base oil solution containing 2% by mass of the polymer is prepared, a kinematic viscosity at 40°C measured in accordance with ASTM D7279 (D445) is 22.4 cSt or less, and
the base oil is a base oil of API standard Group III Plus.

4. The polymer according to Claim 3, wherein the mass average molecular weight is less than 50000.

5. The polymer according to Claim 1 or 3, wherein the polymer further contains a constitutional unit derived from an alkyl (meth)acrylate (b) having an alkyl group having 1 to 10 carbon atoms.

6. The polymer according to Claim 1 or 3, wherein the polymer further contains a constitutional unit derived from a vinyl-based radical polymerizable monomer (m1).

7. The polymer according to Claim 1 or 3, wherein the polymer further contains a constitutional unit derived from a macromonomer (M).

8. The polymer according to Claim 7, wherein the macromonomer (M) contains the constitutional unit derived from the alkyl (meth)acrylate (a) having an alkyl group having 11 to 30 carbon atoms.

9. The polymer according to Claim 7, wherein the macromonomer (M) has a structure of Formula (1),
(in the formula, X¹ to Xⁿ⁻¹ each independently represent a hydrogen atom, a methyl group, or CH₂OH, and Y¹ to Yⁿ each independently represent a substituent other than X¹ to Xⁿ⁻¹ which is bonded to a vinyl group of a vinyl-based radical polymerizable monomer (m2) that is a monomeric constitutional unit of the macromonomer (M), Z represents a terminal group, and n represents an integer of 2 to 10000)

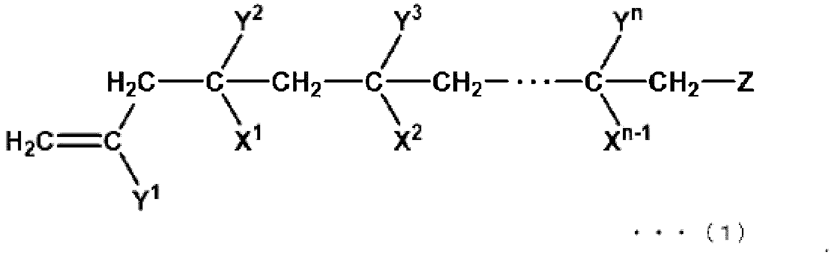

10. A friction reducer for a lubricating oil, comprising:
the polymer according to Claim 1 or 3; and
a base oil.

11. A lubricating oil composition comprising:
the friction reducer for a lubricating oil according to Claim 10.
